# EUROPÄISCHE PATENTANMELDUNG

(11) **EP 2 320 178 A2**
(43) Veröffentlichungstag der Anmeldung: **11.05.2011**
(21) Anmeldenummer: 10187834.6
(22) Anmeldetag: 18.10.2010
(51) Int. Cl.: F25D 23/06

(54) **Kältegerät**

(30) Priorität: 21.10.2009 DE 102009045900
(71) Anmelder: BSH Bosch und Siemens Hausgeräte GmbH, 81739 München (DE)
(72) Erfinder: Kordon, Michael, 89547, Gerstetten (DE); Schlander, Ulrich, 89278, Nersingen (DE); Schlögel, Bernd, 89547, Gerstetten (DE); Strass, Edit, 89365 Röfingen (DE)

(57) **Zusammenfassung**

Bei einem Kältegerät mit einem Innenbehälter (14) und einem Verdampfer durchquert wenigstens eine mit dem Verdampfer verbundene Kältemittelleitung (20; 21) eine Öffnung des Innenbehälters (14) und ist von einer an der Öffnung befestigten Hülse (1) umschlossen.

## Beschreibung

Die vorliegende Erfindung betrifft ein Kältegerät, insbesondere ein Haushalts-Kältegerät, mit einem Innenbehälter und einem in dem Innenbehälter angeordneten Verdampfer.

Um den Verdampfer eines solchen Kältegeräts zu versorgen, muss eine Kältemittelleitung den Innenbehälter passieren. Eine zum Hindurchführen der Kältemittelleitung in den Innenbehälter geschnittene Öffnung birgt stets die Gefahr, dass beim Ausschäumen des Kältegerätegehäuses Schaum durch die Öffnung hindurch tritt. Schaum, der in den Innenbehälter hinein gelangt und darin abbindet, ist kaum wirtschaftlich wieder zu beseitigen. Gegenwärtig ist es üblich, Klebeband zu verwenden, um eine solche Öffnung abzudichten und gleichzeitig das Kältemittelrohr am Innenbehälter provisorisch zu befestigen, damit es während des weiteren Zusammenbaus des Kältegerätegehäuses nicht verbogen oder abgeknickt und beim Ausschäumen des Kältegerätegehäuses nicht verschoben wird. Diese Lösung ist arbeitsintensiv, und es können leicht Fehler auftreten, deren Behebung, soweit sie überhaupt möglich ist, einen hohen Aufwand erfordert.

Aufgabe der vorliegenden Erfindung ist, ein Kältegerät zu schaffen, das eine schnelle Fixierung der Kältemittelleitung und eine zuverlässige Abdichtung der Öffnung des Innenbehälters ermöglicht und es gleichzeitig erlaubt, den Einsatz von Klebeband zu vermeiden.

Die Aufgabe wird gelöst, indem bei einem Kältegerät mit einem Innenbehälter, einem Verdampfer und wenigstens einer eine Öffnung des Innenbehälters querenden und mit dem Verdampfer verbundenen Kältemittelleitung eine an der Öffnung befestigte Hülse die Kältemittelleitung umschließt.

Zur Stabilisierung der Position der Hülse am Innenbehälter weist die Hülse zweckmäßigerweise eine an einer ersten Seite des Innenbehälters anliegende Anlagefläche, insbesondere einen anliegenden Flansch, und einen die Öffnung durchquerenden Rohrabschnitt auf.

Eine formschlüssige Verankerung der Hülse kann mit Hilfe eines Rastvorsprungs des Rohrabschnitts gebildet werden, der an einer zweiten Seite des Innenbehälters anliegt.

Um einen Durchtritt von Schaum im Inneren der Hülse in deren Längsrichtung zu vermeiden, weist die Hülse vorzugsweise wenigstens eine an einer Innenfläche umlaufende Rippe auf.

Vorzugsweise ist diese Rippe nachgiebig, so dass sie sich dem Durchmesser der durch die Hülse verlaufenden Kältemittelleitung anpassen und dicht an diese anschmiegen kann. Die Hülse kann auch als Ganzes nachgiebig sein, um einer Durchbiegung der Kältemittelleitung in Maßen nachgeben und diese dabei abstützen zu können.

Zur Verstärkung der Dichtwirkung können mehrere Rippen in der Hülse vorgesehen sein. Besonders zweckmäßig ist es, wenn diese unterschiedliche freie Innendurchmesser aufweisen, so dass für einen großen Bereich von Durchmessern der Kältemittelleitung unter diesen mehreren Rippen stets wenigstens ist, die sich dicht an die Kältemittelleitung anschmiegen kann.

Um die Kältemittelleitung gegen Abknicken zu sichern, ist es ferner zweckmäßig, wenn die Hülse an einem von dem Innenbehälter abgewandten Ende aufgeweitet ist, so dass die Bewegungsfreiheit der sich durch die Hülse erstreckenden Kältemittelleitung in radialer Richtung zu dem Ende der Hülse hin allmählich zunimmt.

Die Aufweitung der Hülse und insbesondere des Innendurchmessers der in ihr ausgebildeten Rippen erleichtert auch die Annbringung und Abdichtung einer Kältemittelleitung, die in an sich bekannter Weise eine Saugleitung und eine auf einem Teil ihrer Länge innerhalb der Saugleitung geführte Kapillare umfasst, selbst wenn der Eintrittspunkt der Kapillare in die Saugleitung innerhalb der Hülse liegt.

Wenn die Hülse einen gekrümmten Abschnitt der Kältemittelleitung umschließt, ist die Kältemittelleitung weitgehend gegen eine Verschiebung in Längsrichtung der Hülse gesichert.

Zweckmäßigerweise umfasst die Hülse zwei gelenkig, insbesondere durch ein Folienscharnier, verbundene Teile, welche die Kältemittelleitung auf jeweils einem Teil ihres Umfangs umgeben. Dies ermöglicht eine schnelle Montage der Hülse, da sie unmittelbar an der Kältemittelleitung platziert werden kann, anstatt sie von einem Ende der Kältemittelleitung her auf diese aufzuschieben.

Um einen gekrümmten Abschnitt der Kältemittelleitung aufzunehmen, können die zwei Teile der Hülse jeweils eine gekrümmte Rinne umfassen. Das Folienscharnier ist dann vorzugsweise an einer Außenseite dieser Rinnen angeordnet, und Rastmittel, die die beiden Teile der Hülse aneinander verklammern, befinden sich zweckmäßigerweise an einer Innenseite der Rinnen.

Um das Eindringen von Schaum in die Hülse entlang der sich berührenden Ränder der Rinnen zu verhindern, können letztere zweckmäßigerweise mit ineinander greifenden Nuten und Federn versehen sein.

Wenn die Hülse wie beschrieben aus zwei gelenkig verbundenen Teilen gebildet ist, bilden zweckmäßigerweise beide Teile jeweils ein Stück des oben erwähnten, an der ersten Seite des Innenbehälters anliegenden Flansches. Um eine hohe Steifigkeit und sichere Verklammerung der zwei Teile der Hülse zu erreichen, ist es zweckmäßig, wenn die Rastmittel an einander zugewandten plattenförmigen Abschnitten der zwei Teile gebildet sind, die jeweils einen mit dem Stück des Flansches und einen mit der Rinne verbundenen Rand haben.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen perspektivische Ansicht einer erfindungsgemäßen Hülse;
- Fig. 2: einen Querschnitt der Hülse entlang der Linie II-II aus Fig. 1;
- Fig. 3: eine Draufsicht auf eine aufgeklappte Hülse für zwei Versorgungsleitungen; und
- Fig. 4: ein Stück eines Kältegeräte-Innenbehälters mit mit Hilfe der Hülse aus Fig. 3 fixierten Kältemittelleitungen.

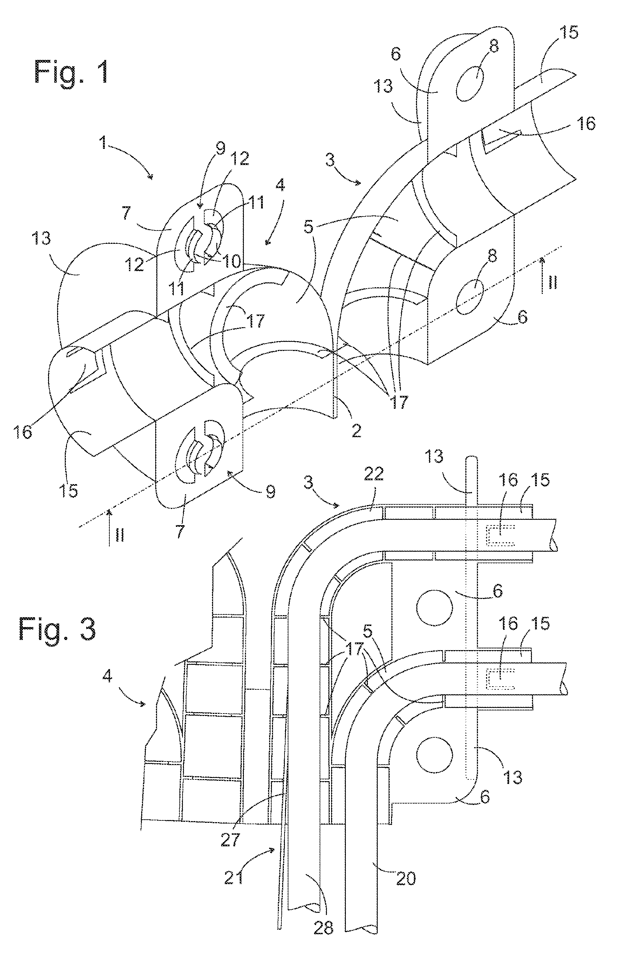

Fig. 1 zeigt in einer perspektivischen Ansicht eine Hülse 1 zur Fixierung einer Kältemittelleitung in einem Durchgang eines Kältegeräte-Innenbehälters. Der Innenbehälter kann insbesondere zu einem No-Frost-Kältegerät gehören, bei dem in an sich bekannter Weise ein von dem Innenbehälter umschlossener Innenraum unterteilt ist in eine Lagerkammer und eine den Verdampfer umgebende Verdampferkammer.

Die Hülse 1 ist ein Spritzteil aus Kunststoff mit zwei im Wesentlichen zueinander spiegelbildlichen, einteilig durch ein Folienscharnier 2 verbundenen Hälften 3, 4. Jede Hälfte 3, 4 umfasst eine Rinne 5 mit halbkreisförmigem Querschnitt, die eine 90°-Biegung beschreibt. An die Ränder der Rinnen 5 sind an Innen- und Außenseite der Biegung Platten 6, 7 angeformt. Die Platten 6 der Hälfte 3 weisen jeweils eine kreisrunde Öffnung 8 auf. Die Platten 7 der Hälfte 4 tragen Rasthaken 9, die vorgesehen sind, um in den Öffnungen 8 zu verrasten, wenn die zwei Hälften 3, 4 aufeinander geklappt sind. Die Rasthaken 9 umfassen jeweils eine passend zum Durchmesser der Öffnung 8 kreisbogenförmige Wand 10 und einen von der Wand 10 radial nach außen abstehenden Vorsprung 11. Sich entlang der Außenseite der Wand 10 in der Platte 7 erstreckende Öffnungen 12 erleichtern das Spritzformen der Rasthaken 9.

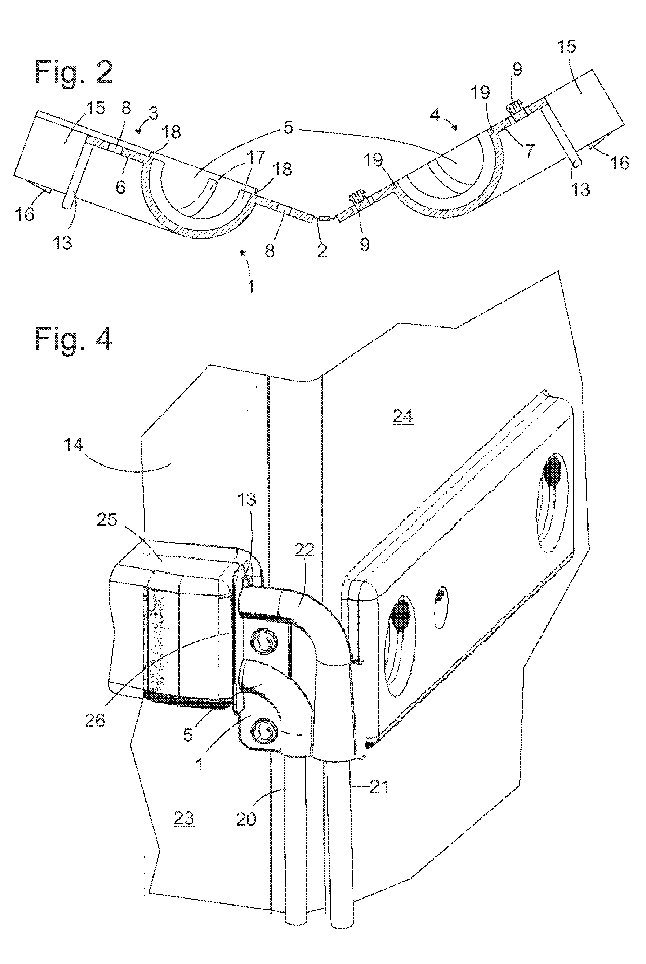

Ein Flanschstück 13 erstreckt sich jeweils um einen geradlinigen Abschnitt der Rinne 5 herum und verbindet die beiden Platten 6 bzw. 7 jeder Hälfte 3, 4. In zusammengeklapptem Zustand der Hülse 1, wenn sich die beiden Rinnen 5 zu einem Rohrstück ergänzen, bilden die zwei Flanschstücke 13 einen rings um das Rohrstück verlaufenden, zu dessen Längsrichtung senkrechten Flansch. Dieser Flansch ist vorgesehen, um schaumseitig an einer Durchgangsöffnung eines Innenbehälters 14 (siehe Fig. 4) platziert zu werden, so dass der gekrümmte Abschnitt der beiden Rinnen 5 außen am Innenbehälter 14 liegt und ein jenseits der Flanschstücke 13 liegender Abschnitt 15 (Fig. 1) der Rinnen 5 in den Innenbehälter eingreift.

In den Abschnitten 15 sind Zungen 16 mit den Flanschstücken 13 zugewandten freien Enden freigeschnitten und geringfügig nach außen ausgeklinkt. Die Öffnung des Innenbehälters 14, in der die Hülse 1 montiert werden soll, ist nur geringfügig größer als der Außenquerschnitt der Abschnitte 15, so dass die Zungen 16 im montierten Zustand an der Innenseite des Innenbehälters 14 angreifen und so die Hülse 1 daran formschlüssig verankern.

Im Innern der Rinnen 5 sind mehrere in Umfangsrichtung verlaufende Rippen 17 ausgebildet, und während die Rinnen 5, die Platten 6, 7 und die Flanschstücke 13 jeweils eine ausreichende Wandstärke haben, um in sich steif zu sein, ist die Wandstärke der Rippen 17 wie die des Folienscharniers 2 so gering, dass sie eine elastische Verformung der Rippen 17 zulässt. Dies ermöglicht es den Rippen 17, sich dem Durchmesser einer durch die Hülse 1 geführten Kältemittelleitung anzupassen und sich an deren Umfang schaumdicht anzuschmiegen.

Fig. 2 zeigt einen Schnitt durch die Hülse 1 entlang der in Fig. 1 mit II-II bezeichneten Linie. Aus diesem Schnitt wird deutlich, dass die einander zugewandten Ränder der Rinnen 5 im Falle der Hälfte 3 mit einer sich über ihre gesamte Länge erstreckenden Feder 18 versehen sind, während die Ränder der Rinne 5 an der Hälfte 4 jeweils eine zu den Federn 18 komplementäre Nut 19 aufweisen. Indem beide ineinander eingreifen, wenn die Rasthaken 9 in den Öffnungen 8 verrastet sind, ist die Schaumdichtigkeit der Hülse 1 auch entlang der Rinnen 5 sichergestellt.

Wie in Fig. 2 angedeutet, können die Nuten 19 geringfügig hinterschnitten sein, und indem die Federn 18 formschlüssig in den Hinterschnitt eingreifen, kann eine zusätzliche Verrastung der Hälften 3, 4 aneinander erreicht werden.

Fig. 3 zeigt eine Draufsicht auf eine Hälfte 3 und ein Stück der Hälfte 4 einer Hülse 1 gemäß einer zweiten Ausgestaltung der Erfindung. Die Hülse 1 der Fig. 3 ist ausgelegt, um zwei Kältemittelleitungen 20, 21 gleichzeitig zu führen und hat daher zwei Rinnen 5, 22 in jeder ihrer Hälften 3, 4. Platten 6, 7 für die Rastöffnungen 8 bzw. die darin eingreifenden Rasthaken 9 sind zwischen den Rinnen 5, 22 sowie an einer Innenseite der Krümmung der inneren Rinne 5 vorgesehen. Die äußere Rinne 22 hat längere geradlinige Abschnitte als die innere Rinne 5 und eine größere Zahl von in diesen geradlinigen Abschnitten gebildeten Rippen 17. An ihrem von dem Flanschstück 13 abgewandten Ende ist die Rinne 22 geringfügig kegelförmig aufgeweitet, und auch der Innendurchmesser der Rippen 17 nimmt zu diesem Ende der Rinne 22 hin zu. Dies ermöglicht es der in der Rinne 22 aufgenommenen Kältemittelleitung 21, einem von außen einwirkenden Biegemoment durch eine Krümmung innerhalb der Rinne 22 nachzugeben, wobei allerdings das Ausmaß dieser Krümmung durch die abstützende Wirkung der Rinne 22 und ihrer Rippen 17 begrenzt ist. Dies verringert die Gefahr eines Abknickens der Kältemittelleitung 21 am Ende der Rinne 22, falls ein zu starkes Biegemoment auf sie einwirkt.

Nicht alle Rippen 17 liegen auf ihrem gesamten Umfang an der Kältemittelleitung 21 an. Dies ist einerseits zweckmäßig, um eine Biege-Bewegungsfreiheit der Kältemittelleitung 21 zu gewährleisten, wie oben beschrieben, zum anderen ist es für die Schaumdichtigkeit der Hülse 1 nicht weiter störend, da eine ausreichende Zahl von Rippen 17 entlang der Rinne 22 auch dann, wenn die Rippen die Kältemittelleitung 21 nicht auf ihrem gesamten Umfang berühren, das Vordringen des Schaums in Längsrichtung der Hülse 1 ohne weiteres so stark verzögern kann, dass Schaum, der eine Rippe 17 passiert hat, in einem Zwischenraum zwischen zwei Rippen 17 abbindet und dadurch selbst die Hülse 1 abdichtet, bevor er sich über ihre gesamte Länge ausgebreitet hat. Darüber hinaus vergrößert die Durchmesserstaffelung der Rippen 17 den Durchmesserbereich der Kältemittelleitungen 20, 21, mit denen die Hülse 1 kombiniert werden kann. Der kleinste zulässige Durchmesser ist derjenige, bei dem die engste Rippe 17 noch berührend dichtet oder wenigstens eine ausreichende Labyrinthdichtwirkung entfaltet; der größte zulässige Durchmesser ist derjenige, bei dem die weiteste Rippe 17 dichtet, wobei es ohne Belang ist, ob andere, engere Rippen 17 durch die Kältemittelleitung irreversibel verformt oder beschädigt werden oder ob wie in Fig. 3 am Beispiel der Leitung 21 gezeigt, eine Kapillare 27 innerhalb der Hülse 1 die Wand des Saugrohrs 28 durchstößt und dadurch die Schaumdichtigkeit der am weitesten außen liegenden Rippen 17 verhindert.

Fig. 4 zeigt die Hülse 1 der Fig. 3 in zusammengeklapptem Zustand, montiert an einem partiell dargestellten Innenbehälter 14. Gezeigt sind ein Stück der Rückwand 23 und einer Seitenwand 24. In der Rückwand 23 ist eine Mulde 25 mit einer zur Seitenwand 24 im Wesentlichen parallelen Flanke 26 angezogen. Die Kältemittelleitungen 20, 21 erstrecken sich durch zwei Öffnungen in der Flanke 26, die durch die Flanschstücke 13 dichtend verdeckt sind. An der vom Betrachter abgewandten Innenseite der Flanke 26 sind die sich durch die Öffnungen der Flanke 26 erstreckenden Abschnitte 15 mit Hilfe ihrer Zungen 16 verrastet. Die zwei Kältemittelleitungen 20, 21, die die Flanke 26 in horizontaler Richtung kreuzen, sind innerhalb der Hülse 1 um 90° nach unten umgebogen und erstrecken sich entlang einer Kante zwischen der Rückwand 23 und der Seitenwand 24 abwärts zu einem Verdichter und einem Verflüssiger, die in einem nicht dargestellten Maschinenraum des Kältegeräts untergebracht sind.

## Patentansprüche

1. Kältegerät, insbesondere Haushaltskältegerät, mit einem Innenbehälter (14), einem Verdampfer und wenigstens einer eine Öffnung des Innenbehälters (14) durchquerenden und mit dem Verdampfer verbundenen Kältemittelleitung (20; 21), **dadurch gekennzeichnet, dass** eine an der Öffnung befestigte Hülse (1) die Kältemittelleitung (20; 21) umschließt.

2. Kältegerät nach Anspruch 1, **dadurch gekennzeichnet, dass** die Hülse (1) eine an einer ersten Seite des Innenbehälters (14) anliegende Anlagefläche, insbesondere einen anliegenden Flansch (13), und einen die Öffnung durchquerenden Rohrabschnitt (15) umfasst.

3. Kältegerät nach Anspruch 2, **dadurch gekennzeichnet, dass** an dem Rohrabschnitt (15) wenigstens ein an einer zweiten Seite des Innenbehälters (14) anliegender Rastvorsprung (16) gebildet ist.

4. Kältegerät nach einem der vorhergehenden Ansprüche, **dadurch gekennzeichnet, dass** die Hülse (1) wenigstens eine an einer Innenfläche umlaufende Rippe (17) aufweist.

5. Kältegerät nach einem der vorhergehenden Ansprüche, **dadurch gekennzeichnet, dass** die Hülse (1) wenigstens lokal, insbesondere an der wenigstens einen Rippe (17), nachgiebig ist.

6. Kältegerät nach Anspruch 4 oder 5, **dadurch gekennzeichnet, dass** die Hülse (1) eine Mehrzahl von Rippen (17) aufweist.

7. Kältegerät nach Anspruch 6, **dadurch gekennzeichnet, dass** die Rippen (17) einen unterschiedlichen freien Innendurchmesser, insbesondere einen zu einem von dem Innenbehälter abgewandten Ende der Hülse hin zunehmenden Innendurchmesser, aufweisen.

8. Kältegerät nach einem der vorhergehenden Ansprüche, **dadurch gekennzeichnet, dass** die Hülse (1) an einem von dem Innenbehälter (14) abgewandten Ende aufgeweitet ist.

9. Kältegerät nach einem der vorhergehenden Ansprüche, **dadurch gekennzeichnet, dass** die Hülse (1) einen gekrümmten Abschnitt der Kältemittelleitung (20; 21) umschließt.

10. Kältegerät nach einem der vorhergehenden Ansprüche, **dadurch gekennzeichnet, dass** die Hülse (1) zwei gelenkig, insbesondere durch ein Folienscharnier (2), verbundene Teile (3; 4) umfasst, die die Kältemittelleitung (20; 21) auf jeweils einem Teil ihres Umfangs umgeben.

11. Kältegerät nach Anspruch 9 und Anspruch 10, **dadurch gekennzeichnet, dass** die zwei Teile (3; 4) der Hülse (1) jeweils wenigstens eine gekrümmte Rinne (5, 22) umfassen, das Folienscharnier (2) an einer Außenseite der Rinnen (5) angeordnet ist und dass die Teile (3; 4) aneinander verklammernde Rastmittel (8; 9) an einer Innenseite der Rinnen (5; 22) angeordnet sind.

12. Kältegerät nach Anspruch 10, **dadurch gekennzeichnet, dass** die zwei Teile (3; 4) entlang sich berührender Ränder der Rinnen (5; 22) ineinandergreifende Nuten (19) und Federn (18) aufweisen.

13. Kältegerät nach Anspruch 11 oder 12, soweit auf Anspruch 2 rückbezogen, **dadurch gekennzeichnet, dass** die zwei Teile (3; 4) der Hülse (1) jeweils ein Stück (13) des Flansches bilden und dass die Rastmittel (8; 9) an einander zugewandten plattenförmigen Abschnitten (6; 7) der zwei Teile (3; 4) gebildet sind, die jeweils einen mit dem Stück (13) des Flansches und einen mit der Rinne (5; 22) verbundenen Rand haben.
